# EUROPÄISCHE PATENTANMELDUNG

(11) **EP 1 739 322 A2**
(43) Veröffentlichungstag der Anmeldung: **03.01.2007**
(21) Anmeldenummer: 06115425.8
(22) Anmeldetag: 14.06.2006
(51) Int. Cl.: F16F 9/348

(54) **Dämpfungsventil**

(30) Priorität: 02.07.2005 DE 102005031013
(71) Anmelder: Continental Aktiengesellschaft, 30165 Hannover (DE)
(72) Erfinder: Gold, Henning, 55452, Dorsheim (DE)

(57) **Zusammenfassung**

Dämpfungsventil (1), umfassend einen Ventilkörper (4) mit einem Durchtrittkanalsystem (6), das zumindest an einer Austrittsseite von mindestens einer Ventilscheibe (8) abgedeckt wird, wobei die Ventilscheibe (8) das Durchtrittskanalsystem (6) in eine erste Strömungsrichtung (10) freigibt und in eine andere zweite Strömungsrichtung (12) verschließt, wobei im Stirnbereich (13, 14) der Ventilscheibe (8) im radial inneren und/oder im radial äußeren Bereich einer Durchtrittsöffnung (17, 19) ein Prallkörper (20, 21) vorhanden ist.

## Beschreibung

Die Erfindung betrifft ein Dämpfungsventil, umfassend einen Ventilkörper mit einem Durchtrittskanalsystem, das zumindest an einer Austrittsseite von mindestens einer Ventilscheibe abgedeckt wird, wobei die Ventilscheibe das Durchtrittskanalsystem in eine erste Strömungsrichtung freigibt und in eine andere zweite Strömungsrichtung verschließt sowie die Verwendung des Dämpfungsventils in einer Feder-Dämpfer-Einheit mit einem gasförmigen Wirkmedium und mindestens zwei Wirkräumen.

Ein derartiges Dämpfungsventil ist aus der Druckschrift DE10351357B3 bekannt. Die Abstimmung der Charakteristik des Dämpfungsventils wird durch die spezielle Anordnung von Deckscheiben und Rückschlagventilscheiben bestimmt, was einen aufwendigen Aufbau zur Folge hat.

Eine Feder-Dämpfer-Einheit mit gasförmigem Wirkmedium ist aus der DE4334007C2 bekannt. In der DE4334007C2 wird eine pneumatische Feder-Dämpfer-Einheit für Kraftfahrzeuge beschrieben, welche einerseits federnde Abstützung und andererseits eine dämpfende Wirkung von Ein- und/oder Ausfederbewegungen der Fahrzeugkarosserie und des Radträgers ermöglichen. Grundsätzlich ist es wünschenswert die Feder- und/oder Dämpfungscharakteristik einer Feder-Dämpfer-Einheit durch Steuerung des Drosselwiderstandes der Überströmkanäle verändern zu können. In der DE4334007C2 wird vorgeschlagen, mittels einer Magnetkraft die Öffnungs- und/oder Schließcharakteristik des Ventilfederplättchens zu beeinflussen.

Aufgabe der Erfindung ist es, ein Dämpfungsventil mit einer sehr fein abstimmbaren Charakteristik und einem einfachen Aufbau zu schaffen.

Erfindungsgemäß wird die Aufgabe durch ein Dämpfungsventil nach den Merkmalen des Anspruchs 1 gelöst. Dabei ist im Stirnbereich der Ventilscheibe im radial inneren oder radial äußeren Bereich der Durchtrittsöffnung ein Prallkörper vorhanden. Der Vorteil des Prallkörpers ist, dass damit die Charakteristik des Dämpfungsventils zusätzlich beeinflusst werden kann, ohne den Aufbau der Ventilscheibe(n) zu verändern, und somit eine sehr feine Abstimmung der Gesamt-Charakteristik des Dämpfungsventils mit einem einfachen Aufbau erlaubt, wobei eine sehr geringe bewegte Masse verwendet wird. Die Ventilscheibe kann aus einer einzelnen Ventilscheibe oder mehreren (mindestens zwei) übereinander angeordneten (Einzel-)Ventilscheiben, welche ein sogenanntes Ventilscheibenpaket bilden, bestehen. Bei einem Ventilscheibenpaket sind auch Ventilscheiben mit unterschiedlichen Außen- und/oder Innendurchmesser und unterschiedlichen Werkstoffen verwendbar.

Ein weiterer Vorteil ist, dass der Prallkörper auch nachträglich in bereits vorhandene Dämpfungsventile eingebracht werden kann. Vorteilhafterweise kann die Charakteristik des Dämpfungsventils durch eine Variation der Ausbildung des Prallkörpers leicht auf unterschiedliche Anforderungen angepasst werden. Ein weiterer Vorteil ist, dass sich der Öffnungsquerschnitt der Ventilscheibe durch den Prallkörper in Abhängigkeit des Öffnungshubes der Ventilscheibe gezielt progressiv und/oder degressiv beeinflussen lässt.

Gemäß einer Weiterbildung der Erfindung nach Anspruch 2 ist vorgesehen, die Prallfläche des Prallkörpers mit einer geradlinigen Kontur zu versehen. Der Vorteil dieser Ausbildung liegt in der einfach zu bestimmenden Charakteristik des Dämpfungsventils in Form einer linearen Kennlinie, wobei der Durchströmquerschnitt (A) eine Funktion des Druckverhältnisses (Δp) ist. Es besteht aber auch die Möglichkeit die Kennlinie des Dämpfungsventils mit einer geradlinigen Kontur des Prallkörpers erst mit einem progressiven Verlauf und ab einem bestimmten Punkt mit einem linearen Verlauf vorzusehen, wenn z.B. die an sich geradlinige Kontur stufenförmig ausgebildet ist.

Gemäß einer Weiterbildung der Erfindung nach Anspruch 3 ist vorgesehen, die Prallfläche des Prallkörpers in einem Winkel zur Ebene der Ventilscheibe anzuordnen. Ein Vorteil dieser Ausbildung besteht darin, dass der Prallkörper mit einer linearen Kontur in Form eines Kegels ausgebildet sein kann und sich damit einfach und kostengünstig herstellen lässt.

Gemäß einer Weiterbildung der Erfindung nach Anspruch 4 ist vorgesehen, dass der Winkel γ in einem Größenbereich von 0° bis 90° liegt. Vorzugsweise ist ein Winkelbereich von 45° bis 95° vorzusehen. In diesem Winkelbereich lässt sich die Kennlinie des Dämpfungsventils besonders stark und gut beeinflussen.

Gemäß einer Weiterbildung der Erfindung nach Anspruch 5 ist vorgesehen, dass die Prallfläche des Prallkörpers mit einer nichtlinearen - vorzugsweise kurvenförmigen - Kontur versehen ist. Ein Vorteil der Weiterbildung ist, dass die Charakteristik und damit die Kennlinie des Dämpfungsventils zumindest in bestimmten Bereichen genau auf die Anforderungen des Dämpfungsverhaltens des zu bedämpfen Feder-Masse-Systems abgestimmt werden kann, wobei eine progressive und/oder eine degressive Charakteristik erzielt werden kann.

Gemäß einer Weiterbildung der Erfindung nach Anspruch 6 ist vorgesehen, dass die Kontur in Form eines Kreisabschnittes mit einem Radius R und einem Mittelpunkt M ausgebildet ist. Ein Vorteil dieser Ausbildung besteht darin, dass sich der Prallkörper mit einer Kontur in Form eines Kreisbahnabschnittes besonders einfach und kostengünstig herstellen lässt, insbesondere einer progressiven Charakteristik.

Gemäß einer Weiterbildung der Erfindung nach Anspruch 7 ist vorgesehen, dass der Mittelpunkt der Kreisbahn in der von der Anlagefläche gebildeten Ebene angeordnet ist. Der Vorteil dieser Weiterbildung ist die besonders einfache und kostengünstige Herstellung des Prallkörpers und der Anordnung dieses in dem Dämpfungsventil.

Gemäß einer Weiterbildung der Erfindung nach Anspruch 8 ist vorgesehen, dass der Mittelpunkt der Kreisbahn einen Abstand von der Ebene der Anlagefläche aufweist. Der Abstand kann sowohl in der einen - positiven - Richtung als auch in der anderen - negativen - Richtung erfolgen. Ein Vorteil dieser Weiterbildung ist, dass die Kennlinie des Dämpfungsventils auf einfache Art und Weise durch eine Verschiebung des Abstands des Mittelpunktes zur Ebene der Anlagefläche stark variiert werden kann.

Gemäß einer Weiterbildung der Erfindung nach Anspruch 9 ist vorgesehen, dass der Prallkörper mindestens eine Öffnung aufweist. Vorzugsweise weist die zylindrische Form des Prallkörpers eine derartige Öffnung auf. Der Vorteil der Weiterbildung ist darin zu sehen, dass somit auch quasi sprunghafte Änderungen der Dämpfungscharakteristik des Dämpfungsventils ermöglicht werden. Vorteilhafterweise lässt sich mit dieser Weiterbildung zuerst ein degressiver und ab einem bestimmten Punkt ein progressiver Kennlinieverlauf des Dämpfungsventils oder umgekehrt erzeugen.

Gemäß einer Weiterbildung der Erfindung nach Anspruch 10 ist vorgesehen, dass die Durchtrittsöffnung bei Anlage der Ventilscheibe(n) an der Anschlagfläche durch Kontakt der Ventilscheibe(n) mit dem Prallkörper schließbar ist. Der Vorteil dieser Weiterbildung ist darin zu sehen, dass der Drosselquerschnitt zu Beginn der Öffnung der Ventilscheibe(n) vergrößert wird und eine progressive Charakteristik gestattet und ab einem bestimmten Öffnungshub der Ventilscheibe(n) konstant bleibt oder wieder abnimmt und am Ende des Öffnungshubes der Ventilscheibe(n), wenn diese an der Anschlagfläche anliegt, der geöffnete Drosselquerschnitt wieder gegen Null tendiert und das Dämpfungsventil wieder geschlossen wird.

Gemäß einer Weiterbildung der Erfindung nach Anspruch 11 ist vorgesehen, dass der Prallkörper nur in einem Teilbereich der Ausströmöffnung des Durchtrittskanals im Bereich der Stirnfläche der Ventilscheibe angeordnet ist. Ein Vorteil dieser Weiterbildung ist darin zu sehen, dass nur an einer oder mehreren Ausströmöffnungen der Durchtrittsöffnungen des Ventilkörpers ein Prallkörper angeordnet ist und die Kennlinie des Dämpfungsventils an dieser Stelle gezielt beeinflusst.

Gemäß einer Weiterbildung der Erfindung nach Anspruch 12 ist vorgesehen, dass der Prallkörper aus einzelnen Segmenten besteht. Ein Vorteil dieser Weiterbildung ist, dass jedes Segment des Prallkörpers eine andere Kontur der Prallfläche aufweisen kann und aus einem anderen Werkstoff bestehen kann. Damit lassen sich alle möglichen Varianten zur Beeinflussung der Kennlinie des Dämpfungsventils mittels eines Prallkörpers herstellen.

Gemäß einer Weiterbildung der Erfindung nach Anspruch 13 ist vorgesehen, dass der Prallkörper die Ventilscheibe in radialer Richtung fixiert. Der Vorteil der Weiterbildung besteht darin, dass keine zusätzlichen Bauteile für eine radial Fixierung der Ventilscheibe(n) benötigt werden und der Aufbau des Dämpfungsventils sich insgesamt vereinfacht. Die Fixierung kann als Führung der Ventilscheibe(n) durch den Prallkörper ausgeführt werden.

Gemäß einer Weiterbildung der Erfindung nach Anspruch 14 ist vorgesehen, dass der Prallkörper außerhalb des Durchtrittskanalsystems und in Strömungsrichtung des Wirkmediums betrachtet nach dem Durchtrittskanalsystem und nach der Ventilscheibe angeordnet ist. Damit ist der Vorteil verbunden, dass die Charakteristik des Dämpfungsventils zusätzlich, ohne den Aufbau und/oder die Befestigung der Ventilscheibe(n) zu verändern, beeinflusst werden kann und somit eine sehr feine Abstimmung der Gesamt-Charakteristik des Dämpfungsventils mit einem einfachen Aufbau erlaubt. Ein weitere Vorteil ist, dass der Prallkörper auch nachträglich in bereits vorhandene Dämpfungsventile eingebracht werden kann. Vorteilhafterweise kann die Gesamt-Charakteristik des Dämpfungsventil durch eine Variation der Ausbildung des Prallkörpers leicht auf unterschiedliche Anforderungen angepasst werden.

Gemäß einer Weiterbildung der Erfindung nach Anspruch 15 ist vorgesehen, dass die Ventilscheibe als Ringscheibe ausgebildet ist, die im Bereich ihres Innenumfangs mit einer ersten Anlagefläche des Ventilkörpers und im Bereich ihres Außenumfangs mit einer zweiten Anlagefläche des Ventilkörpers zusammenwirkt, wobei das Durchtrittskanalsystem durch die Anlage der Ventilscheibe an der ersten Anlagefläche in der ersten Strömungsrichtung verschließbar ist und die Anlage der Ventilscheibe in der zweiten Strömungsrichtung zumindest teilweise aufhebbar ist oder umgekehrt, wobei das Durchtrittskanalsystem durch die Anlage der Ventilscheibe an der zweiten Anlagefläche in der zweiten Strömungsrichtung verschließbar ist und die Anlage der Ventilscheibe in der ersten Strömungsrichtung zumindest teilweise aufhebbar ist oder umgekehrt.

Mit dieser vorteilhaften Weiterbildung kann der Aufbau des Dämpfungsventils noch weiter vereinfacht werden, indem nur eine einzige Ventilscheibe oder ein einziges Ventilscheibenpaket verwendet wird, welche(s) in beide(n) Strömungsrichtungen geöffnet werden kann. Solch ein Dämpfungsventil kann je Strömungsrichtung verschiedene Charakteristiken aufweisen, indem nur auf einer Seite des Durchtrittkanalsystems ein Prallkörper verwendet wird oder unterschiedliche Prallkörper auf beiden Seiten verwendet werden.

Gemäß einer Weiterbildung der Erfindung nach Anspruch 16 ist vorgesehen, dass die Ventilscheibe oder das Ventilscheibenpaket aus magnetisierbarem Material besteht, wobei die Ventilscheibe oder das Ventilscheibenpaket in unbelastetem Zustand das Durchtrittkanalsystem verschließt und die Öffnungs- und/oder Schließkraft und/oder die Steifigkeit der Ventilscheibe und/oder des Ventilscheibenpakets mittels eines durch steuerbaren Gleichstrom oder Wechselstrom beaufschlagbaren Elektromagneten veränderbar ist. Die magnetische(n) Ventilscheibe(n) oder das Ventilscheibenpaket können durch das Magnetfeld des Elektromagneten beeinflusst werden, sind aber nicht magnetisierbar, d.h. sie weisen keinen Rest-Magnetismus auf, sobald das Magnetfeld des Elektromagneten nicht mehr vorhanden ist. Als Werkstoffe eignen sich insbesondere Federstahl oder Bronzewerkstoffe.

Der Vorteil dieser Weiterbildung besteht darin, dass sich die Charakteristik und damit die Kennlinie des Dämpfungsventils sehr gezielt auf die Anforderungen abstimmen lässt, indem durch die Magnetkraft auf die Ventilscheibe oder das Ventilscheibenpaket eine, neben der Kraft durch das Wirkmedium, zusätzliche Öffnungs- und/oder Schließkraft einwirkt sowie eine Steifigkeitsänderung bewirkt wird. Damit lässt sich eine Charakteristik des Dämpfungsventil erzeugen, welche weitestgehend unabhängig von den Ein- und/oder Ausfederbewegungen des zu bedämpfenden Feder-Masse-Systems ist, und somit lässt jede gewünschte Dämpfungswirkung zu einem beliebigen Zeitpunkt erzeugen, wobei das Dämpfungsventil sehr schnell auf Änderungen anspricht, weil keine großen Ventil-Massen bewegt werden müssen.

Gemäß einer Weiterbildung der Erfindung nach Anspruch 17 ist vorgesehen, dass der Prallkörper aus einem nichtmagnetischem Material besteht. Vorteilhafterweise werden mit dieser Weiterbildung die Kennlinien des Magnetfeldes des Elektromagneten nicht beeinflusst, sodass diese Kennlinien nur durch den Elektromagneten, den Ventilkörper und die Ventilscheibe(n) beeinflusst werden. Der Prallkörper kann beispielsweise aus Edelstahl, Aluminium, Kunststoff oder einem Verbundfaserwerkstoff bestehen. Ein weiterer Vorteil ist darin zu sehen, dass die Prallkörper je Durchströmungsrichtung aus unterschiedlichem Material bestehen können, beispielsweise in eine Richtung aus magnetischem Material und in die andere Richtung aus nicht-magnetischem Material, sodass eine unsymmetrische Wirkung des Elektromagneten hervorgerufen wird, was ein unsymmetrisches Dämpfungsventil zur Folge hat.

Erfindungsgemäß wird nach Anspruch 18 ein solches Dämpfungsventil in einer Feder-Dämpfer-Einheit mit einem gasförmigen Wirkmedium und mindestens zwei Wirkräumen verwendet. Der Vorteil besteht darin, dass die Feder- und/oder Dämpfungscharakteristik der Feder-Dämpfer-Einheit sehr fein abgestimmt werden kann und damit die Kennlinie der Feder-Dämpfer-Einheit sehr präzise an die Anforderungen angepasst werden kann.

Vorteilhafterweise lassen sich hiermit bisher nicht erreichbare Charakteristika einer Feder-Dämpfer-Einheit erzielen und sehr gezielt bestimmte Frequenzbereiche des zu bedämpfenden Feder-Masse-Systems beeinflussen, wobei eine laminare oder noch besser eine unter-laminare Strömung des Wirkmediums durch das Dämpfungsventil anzustreben ist. Dies kann im Vergleich zur Hydraulik bei kleineren Druckverhältnissen zwischen den Wirkräumen mit größeren Durchmessern der Ventilscheibe(n) und einem wesentlich größerem Hub der Ventilscheibe(n) im Bereich von bis zu 5mm erreicht werden.

Insbesondere bei größeren Hubbewegungen der Ventilscheibe(n) im Bereich von 1mm bis 5mm lassen sich einfache Konturen der Prallkörper mit vertretbaren Toleranzen herstellen.

Anhand der folgenden Figurenbeschreibung wird die Erfindung näher beschrieben:
Es zeigt:
   Fig. 1 Dämpfungsventil in einer Schnittdarstellung (Drossel geschlossen)
   Fig. 2 Detaildarstellung des Dämpfungsventils
   Fig. 3 Detaildarstellung des Dämpfungsventils
   Fig. 4 Detaildarstellung des Dämpfungsventils
   Fig. 5 Detaildarstellung des Dämpfungsventils
   Fig. 6 Detaildarstellung des Dämpfungsventils
   Fig. 7 Dämpfungsventil in einer Schnittdarstellung (Drossel durchströmt beim Einfedern)
   Fig. 8 Dämpfungsventil in einer Schnittdarstellung (Drossel durchströmt beim Ausfedern)
   Fig. 9 Feder-Dämpfer-Einheit
   Fig. 10 Schnittdarstellung eines Dämpfungsventils in axialer Draufsicht

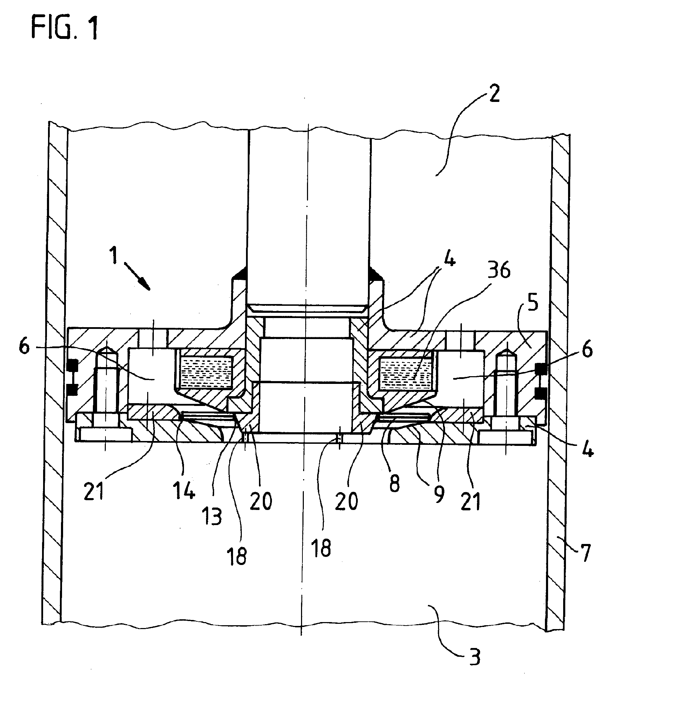

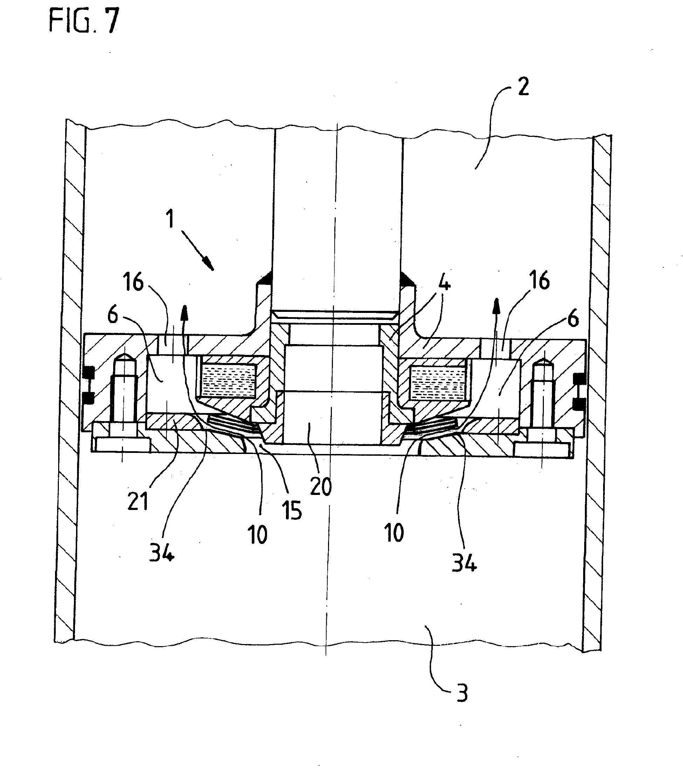

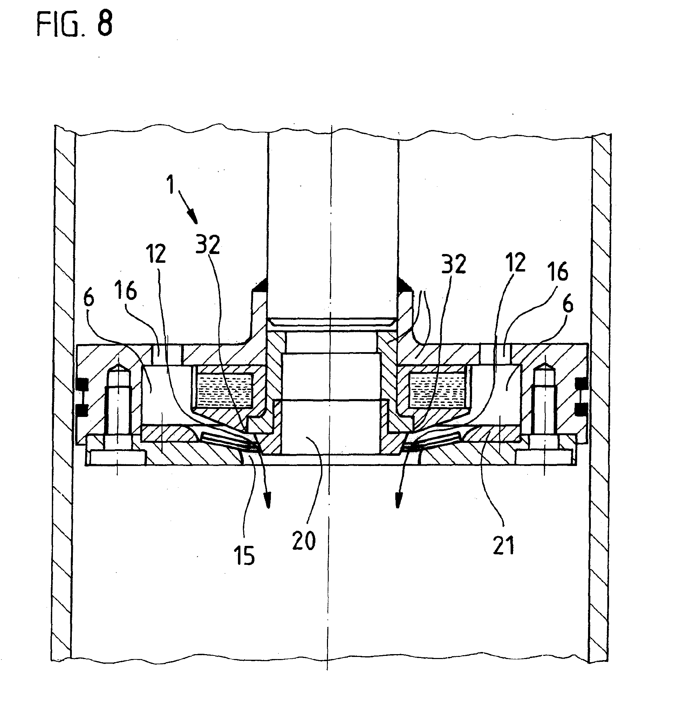

Die Figur 1 zeigt eine Schnittdarstellung durch ein Dämpfungsventil 1, insbesondere für einen Schwingungsdämpfer für eine pneumatische Feder- und Dämpfer-Einheit. Ein Ventilkörper 4 des Dämpfungsventils 1 verfügt über ein Durchtrittskanalsystem 6 in der Ausführung von weitestgehend axial verlaufenden Kanälen oder Bohrungen. Der Ventilkörper 4 ist in diesem Ausführungsbeispiel als zweiteiliger Kolben 5 ausgebildet. Eine Ventilscheibe 8 verschließt in ihrem Ruhezustand das Durchtrittskanalsystem, sodass kein Wirkmedium von dem ersten Wirkraum 2 in einen zweiten Wirkraum 3 in einer ersten oder zweiten Strömungsrichtung (vgl. 10,12 der Fig. 7 oder Fig. 8) überführt werden kann. Die Ventilscheibe 8 besteht in diesem Fall aus zwei übereinander angeordneten Ventilscheiben und bildet ein sogenanntes Ventilscheibenpaket. Ein solches Ventilscheibenpaket kann auch aus mehr als zwei einzelnen Ventilscheiben bestehen oder aber es kann auch nur eine einzelne Ventilscheibe 8 verwendet werden. Die Verwendung eines Ventilscheibenpaketes mit mehreren Ventilscheiben aus magnetischem Werkstoff ist für die magnetische Beeinflussung dieser von Vorteil, weil die magnetischen Kräfte zwischen den einzelnen Ventilscheiben die Steifigkeit des gesamten Ventilscheibenpaketes vergrößern.

Der Ventilkörper 4 ist mehrteilig in Form eines Kolbens 5 ausgeführt. Die Einzelteile des Ventilkörpers 4 können mittels herkömmlicher und bekannter Verbindungstechniken (Schraub,- Press-, Klebeverbindung, etc.) miteinander verbunden werden. Es ist aber auch möglich den Ventilkörper 4 einteilig auszuführen. Der Kolben 5 ist innerhalb eines Zylinders 7 axial beweglich und gegenüber der Zylinderwand mittels eines Dichtringes abgedichtet. Bei einem pneumatischen Dämpfungsventil 1 ist es manchmal von Vorteil, dass die Dichtung zwischen dem Kolben 5 und dem Zylinder 7 nicht vollständig dicht ausgeführt ist, sondern einen geringe Strömung des Wirkmediums, in diesem Fall Luft oder Gas, zulässt. Gegebenenfalls ist auch ein Bypass mit einem geringen Querschnitt in dem Dämpfungsventil 1 vorhanden, welcher den ersten Wirkraum 2 mit dem zweiten Wirkraum 3 verbindet. Vorzugsweise wird eine turbulente Strömung des Wirkmediums durch das Bypassventil angestrebt.

Die Ventilscheibe 8 kann, wenn es die Druckdifferenz des Wirkmediums zwischen dem ersten Wirkraum 2 und dem zweiten Wirkraum 3 zulassen, das Durchtrittskanalsystem 6 in eine Strömungsrichtung zumindest teilweise freigeben, sodass ein Druckausgleich zwischen den beiden Wirkräumen 2,3 stattfinden kann. Das Dämpfungsventil 1 weist in der Ausführung nach der Fig.1 nur eine Ventilscheibe 8 auf, welche sowohl in die eine als auch in die andere Strömungsrichtung geöffnet werden kann, wenn die Druckdifferenz der Wirkräume 2,3 dies erfordert. Es ist aber auch eine Ausführung möglich in welcher das Dämpfungsventil 1 mindestens zwei Ventilscheiben 8 aufweist, wobei die eine Ventilscheibe 8 dann in die eine Strömungsrichtung geöffnet werden kann sowie in die andere Strömungsrichtung schließt, und eine weitere Ventilscheibe 8 in die eine Strömungsrichtung schließt und in die andere Strömungsrichtung geöffnet werden kann. Eine nähere Beschreibung der Strömungsrichtungen erfolgt in den Figuren 7 und 8.

Die Ventilscheibe 8 ist als eine Zylinderscheibe ausgeführt, wobei sowohl im Stirnbereich 13 des inneren Durchmessers der Ventilscheibe 8 als auch im Stirnbereich 14 des äußeren Durchmessers der Ventilscheibe 8 jeweils ein Prallkörper 20 bzw. 21 mit einer unterschiedlichen Kontur 24; 26 angeordnet ist. Weiterhin sind an dem inneren Durchmesser der Ventilscheibe 8 drei Stifte 18, wovon zwei im Schnitt dargestellt sind, zur Zentrierung und Fixierung der Ventilscheibe 8 in radialer Richtung angeordnet. Der jeweilige Prallkörper 20, 21 kann mittels einer Schraub-, Press- oder Klebeverbindung oder dgl. mit dem Ventilkörper 4 verbunden sein oder einteilig in den Ventilkörper 4 integriert sein. Durch den Prallkörper 20, 21 lässt sich der Öffnungsquerschnitt der Ventilscheibe 8 in der jeweiligen Strömungsrichtung über dem Öffnungshub der Ventilscheibe 8 gezielt beeinflussen. Der Öffnungsquerschnitt der Ventilscheibe 8 ist somit von dem Öffnungshub der Ventilscheibe 8 abhängig. Durch den Öffnungsquerschnitt der Ventilscheibe 8 wiederum lässt sich die Kennlinie der Dämpferkräfte des Dämpfungsventils 1 wesentlich beeinflussen und zwar entweder in progressiver oder degressiver Weise, wobei eine progressive Kennlinie aufgrund eines geringer Durchströmungsquerschnittes durch eine turbulente Strömung des Wirkmediums durch das Dämpfungsventil 1 hervorgerufen wird.

Eine laminare Strömung des Wirkmediums durch das Dämpfungsventil 1 hat aufgrund des proportionalen Querschnittes eine lineare Kennlinie der Dämpferkräfte des Dämpfungsventils 1 zur Folge, da die Dämpfungskraft F_{D} proportional zur Hubgeschwindigkeit des Wirkmediums v_{g} ist. Durch den Prallkörper lassen sich ggf. auch unter-laminare Strömungen des Wirkmediums durch das Dämpfungsventil 1 darstellen, was infolge der Beziehung F_{D} = k * (v_{g})ⁿ mit dem Exponenten n<1 und der Drosselkonstante k eine degressive Kennlinie der Dämpferkräfte des Dämpfungsventils 1 hervorruft. Hierbei ist die Drosselkonstante k eine Funktion der durch die geöffnete Ventilscheibe 8 freigegebenen Querschnittsfläche A des Dämpfungsventils 1; mit k = f(1/A). Damit lässt sich - gegenüber der turbulenten Strömung - eine größere Dämpfungsarbeit bei gleicher maximaler Dämpfkraft verrichten.

Die Öffnung der Ventilscheibe 8 in beide Strömungsrichtungen wird jeweils durch eine Anschlagfläche 9 zur Vermeidung einer plastischen Verformung der Ventilscheibe 8 begrenzt. Zur Unterstützung der Öffnungs- und/oder Schließkraft oder der Beeinflussung der Steifigkeit der Ventilscheibe 8 in die jeweilige Öffnungsrichtung der Ventilscheibe 8 weist das Dämpfungsventil 1 einen Elektromagneten 36 auf. Der Elektromagnet 36 kann mit Hilfe von Gleich- oder Wechselstrom betrieben werden. Soll die Öffnungs- und/oder Schließkraft der Ventilscheibe 8 durch die Magnetkraft des Elektromagneten 36 beeinflusst werden, dann ist die Ventilscheibe 8 aus einem magnetisierbaren Werkstoff oder vorzugsweise einem magnetischen Werkstoff, welcher nach dem Abschalten des Elektromagneten und dem Abfall des Magnetfeldes keine Restmagnetisierung aufweist, hergestellt. Die Magnetkraft dient zur Unterstützung der Schließkraft der Ventilscheibe 8 zusätzlich zur Federkraft der Ventilscheibe 8.

Ebenso kann der Ventilkörper 4 und/oder der Prallkörper 20, 21 zur Beeinflussung des Magnetfeldes des Elektromagneten 36 aus einem magnetisierbaren oder vorzugsweise aus einem magnetischen Material bestehen. Ist eine Beeinflussung des Magnetfeldes nicht erwünscht, dann kann der Prallkörper 20, 21 aus einem nichtmagnetischen Material, beispielsweise Edelstahl oder Kunststoff, bestehen. Vorzugsweise sind die Prallkörper 20,21, welche den Öffnungsquerschnitt der Ventilscheibe 8 in beide Strömungsrichtungen des Wirkmediums beeinflussen, aus einem magnetisierbaren oder magnetischen oder nicht magnetischen Werkstoff hergestellt, um eine möglichst Symmetrische Kennlinie des Dämpfungsventils 1 zu erzielen. Ist eine möglichst Unsymmetrische Kennlinie des Dämpfungsventils 1 erwünscht, dann kann auch nur der Prallkörper 20, 21, welcher den Öffnungsquerschnitt der Ventilscheibe 8 in einer Strömungsrichtung des Wirkmediums beeinflusst, aus einem magnetisierbaren oder magnetischen Werkstoff hergestellt sein und der andere Prallkörper 21, 20, welcher den Öffnungsquerschnitt der Ventilscheibe 8 in der anderen Strömungsrichtung des Wirkmediums beeinflusst, aus einem nicht-magnetischen Material hergestellt sein. Die Stifte 18 sind zwar in dem jeweiligen Stirnbereich 13, 14 der Ventilscheibe 8 angeordnet ohne einen messbaren Einfluss auf die Charakteristik des Dämpfungsventils 1 auszuüben, da deren Querschnitt und Oberfläche (und damit die mögliche Widerstandsfläche gegenüber dem Druckmedium) sehr gering gegenüber einem Prallkörper 20, 21 ist.

Weiterhin ist es möglich nur Teilbereiche des Prallkörpers 20, 21aus einem magnetisierbaren oder magnetischen Werkstoff herzustellen oder den Prallkörper 20, 21, welcher den Öffnungsquerschnitt der Ventilscheibe 8 in einer Strömungsrichtung des Wirkmediums beeinflusst, vorzugsweise in Umfangsrichtung aus mehreren Einzelteilen oder Einzelsegmenten herzustellen, wobei jedes Einzelteil oder Einzelsegment einen anderen Werkstoff aufweisen kann.

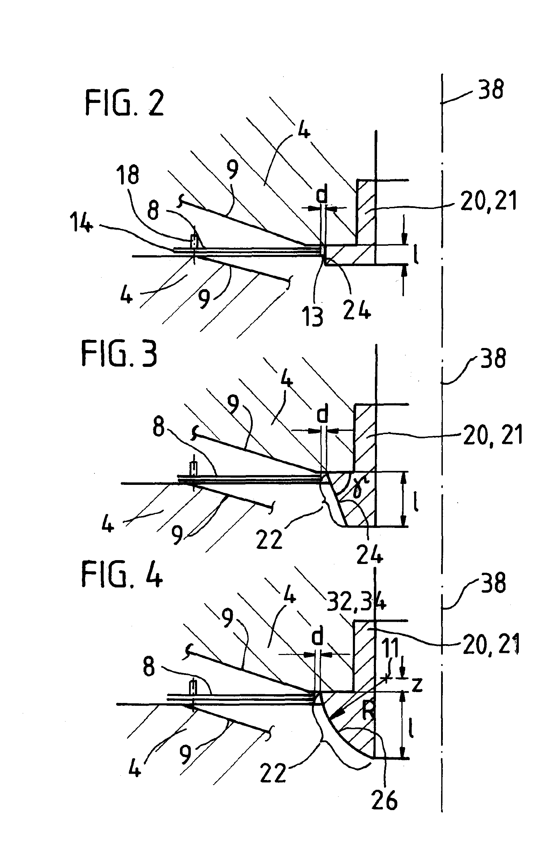

Die Fig. 2 zeigt eine Detaildarstellung des Dämpfungsventils 1 mit einem Ausschnitt des Durchtrittkanalsystems 6 des Ventilkörpers 4 in einem Teilbereich der Ventilscheibe 8. Die Ventilscheibe 8 setzt sich in diesem Beispiel aus zwei einzelnen Ventilscheiben, einem sogenannten Ventilscheibenpaket, zusammen, wobei auch mehr als zwei einzelne Ventilscheiben verwendbar sind oder auch nur eine einzelne Ventilscheibe verwendbar ist. Im Stirnbereich 13 des inneren Durchmessers der Ventilscheibe 8 ist diese in einem Abstand d von dem Prallkörper 20, 21 angeordnet. Der Abstand d sollte möglichst klein sein, da bis zu einem Hub der Ventilscheibe, welcher dem Abstand d entspricht, der Öffnungsquerschnitt vom Prallkörper kaum beeinflusst wird. Der Prallkörper 20, 21 weist im Öffnungsbereich der Ventilscheibe 8 eine Länge 1 auf, welche den Öffnungsquerschnitt der Ventilscheibe 8 vorzugsweise in einem Teilbereich, beispielsweise von 0 mm bis 2 mm beeinflusst. Der Öffnungshub und damit der Öffnungsquerschnitt der Ventilscheibe 8 wird durch die Anschlagfläche 9 in der jeweiligen Strömungsrichtung des Wirkmediums begrenzt. Die Kontur 24 des Prallkörpers 20, 21 im Bereich des Öffnungsquerschnittes ist in diesem Ausführungsbeispiel geradlinig ausgeführt. Im Stirnbereich 14 des äußeren Durchmessers der Ventilscheibe 8 ist in diesem Ausführungsbeispiel kein Prallkörper angeordnet. Durch den Abstand d ist die Ventilscheibe 8 in radialer Richtung fixierbar.

Weiterhin sind (mindestens) drei Zentrierstifte 18 in dem Ventilkörper 4 fest angeordnet, welche die Ventilscheibe(n) 8 in radialer Richtung fixieren. Die Zentrierstifte 18 sind so angeordnet, dass diese den Wirkungsbereich des Druckmediums des Dämpfungsventils 1 nicht (messbar) beeinflussen. Da die Zentrierstifte 18 im Stirnbereich 13,14 der Ausströmöffnung der Ventilscheibe(n) 8 in Strömungsrichtung 10, 12 des Druckmediums liegen, aber einen sehr geringen Querschnitt und eine sehr geringe Oberfläche im Vergleich zu dem durchströmten Kanal oder einem Prallkörper 20, 21 aufweisen, können diese die Charakteristik des Dämpfungsventils 1 nicht oder nicht messbar beeinflussen. Vorzugsweise werden auf dem Umfang drei Zentrierstifte 18 zur Fixierung der Ventilscheibe(n) 8 gleichmäßig verteilt angeordnet. Die Funktion der Zentrierstifte 18 kann auch von einem dann vorzugsweise symmetrisch ausgebildeten Prallkörper 20, 21 ausgeübt werden, sodass die Zentrierstifte 18 entfallen können. Um die Ventilscheibe(n) 8 zu fixieren, ist es auch möglich, dass (nicht nur wie gezeigt) die Zentrierstifte 18 an dem äußeren Durchmesser und/oder an dem inneren Durchmesser der Ventilscheibe(n) 8 und ggf. zusätzlich zu dem Prallkörper 20, 21 angeordnet sind.

Die Fig. 3 zeigt eine weitere Variante des Dämpfungsventils 1 in einer Detaildarstellung, wobei gegenüber der Ausführung nach Fig. 2 eine andere Kontur 24 des Prallkörpers 20, 21 dargestellt wird. Die Kontur 24 des Prallkörpers 20, 21 verläuft ebenfalls geradlinig, wobei sich der Öffnungsquerschnitt der Ventilscheibe 8 kontinuierlich über dem Öffnungshub vergrößert. Die Länge 1 des Prallkörpers 20, 21 ist in diesem Fall so ausgeführt, dass der Prallkörper 20, 21 über den gesamten Öffnungshub der Ventilscheibe 8 bis zur Anlage der Ventilscheibe 8 an der Anschlagfläche 9 den Öffnungsquerschnitt der Ventilscheibe 8 beeinflusst. Es ist aber auch denkbar, dass, wie in Fig. 2 gezeigt, die Länge 1 des Prallkörpers 20, 21 nur einen Teilbereich des Öffnungsquerschnittes der Ventilscheibe 8 beeinflusst. Mit dieser Ausführung des Prallkörpers 20, 21 lässt sich die gleiche Charakteristik des Dämpfungsventils 1 erzeugen wie ohne Prallkörper, aber die Kennlinie des Dämpfungsventils 1 verläuft wesentlich steiler. Der Winkel γ wird vorzugsweise in einem Bereich von 0° bis 90° zur Ebene der Ventilscheibe 8, welche senkrecht zur Achse 38 angeordnet ist, ausgewählt.

Die Fig. 4 zeigt eine weitere Variante des Dämpfungsventils 1 in einer Detaildarstellung, wobei gegenüber der Ausführung nach Fig. 3 eine kurvenförmige Kontur 26 des Prallkörpers 20, 21 dargestellt wird. Durch die kurvenförmige Kontur 26 des Prallkörpers 20, 21 vergrößert sich der Öffnungsquerschnitt der Ventilscheibe 8 progressiv über dem Öffnungshub. Die Kontur 26 der Prallfläche 22 des Prallkörpers 20, 21 ist als Kreisbahnabschnitt mit einem Mittelpunkt M und einem Radius R ausgeführt, wobei der Mittelpunkt M in einem Abstand z von der Ebene der Anlagefläche 32, 34 beabstandet ist. Der Abstand z des Mittelpunktes M kann auch in auf der anderen Seite der Ebene der Anlagefläche 32, 34 angeordnet sein oder der Mittelpunkt ist genau in der Ebene der Anlagefläche 32, 34 angeordnet. Die Länge 1 des Prallkörpers 20, 21 ist in diesem Fall so ausgeführt, dass der Prallkörper 20, 21 über den gesamten Öffnungshub der Ventilscheibe 8 bis zur Anlage der Ventilscheibe 8 an der Anschlagfläche 9 den Öffnungsquerschnitt der Ventilscheibe 8 beeinflusst. Es ist aber auch denkbar, dass, wie in Fig. 2 gezeigt, die Länge 1 des Prallkörpers 20, 21 nur einen Teilbereich des Öffnungsquerschnittes der Ventilscheibe 8 beeinflusst. Der Abstand z beeinflusst insbesondere die Anfangssteigung der entsprechenden Kennlinie der Dämpferkräfte.

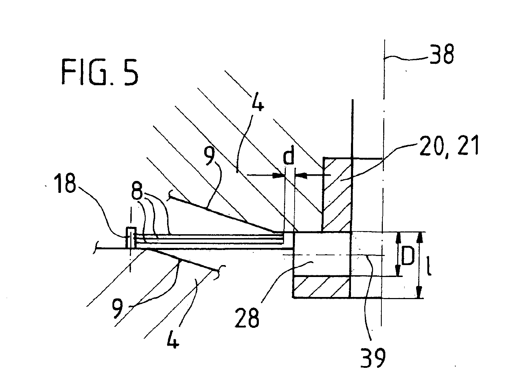

Die Fig. 5 zeigt eine weitere Variante des Dämpfungsventils 1 in einer Detaildarstellung, wobei gegenüber der Ausführung nach Fig. 2 der Prallkörper 20, 21 zumindest eine Öffnung 28 aufweist. Es sind aber auch mehrere Öffnungen 28, welche nebeneinander angeordnet sind, verwendbar. Der Querschnitt der Öffnung 28 kann eine beliebige Form oder Ausgestaltung aufweisen, wobei vorzugsweise ein kreisrunder Querschnitt mit einem Durchmesser D verwendet wird. Die Achse 39 der Öffnung 28 wird vorzugsweise in einem Winkel von 90° zur Achse 38 der Ventilscheibe 8 oder des Dämpfungsventils 1 angeordnet. Die Länge 1 des Prallkörpers 20, 21 ist in diesem Fall so ausgeführt, dass der Prallkörper 20, 21 über den gesamten Öffnungshub der Ventilscheibe 8 bis zur Anlage der Ventilscheibe 8 an der Anschlagfläche 9 den Öffnungsquerschnitt der Ventilscheibe 8 beeinflusst, wobei durch die Öffnung 28 zumindest Teilbereiche des Prallkörpers 20, 21 von einer Beeinflussung des Öffnungsquerschnittes der Ventilscheibe 8 ausgespart bleiben. Es ist aber auch denkbar, dass, wie in Fig. 2 gezeigt, die Länge 1 des Prallkörpers 20, 21 nur einen Teilbereich des Öffnungsquerschnittes der Ventilscheibe 8 beeinflusst. Im Stirnbereich der Ventilscheibe 8 ist zur radialen Fixierung ein Zentrierstift 18 angeordnet.

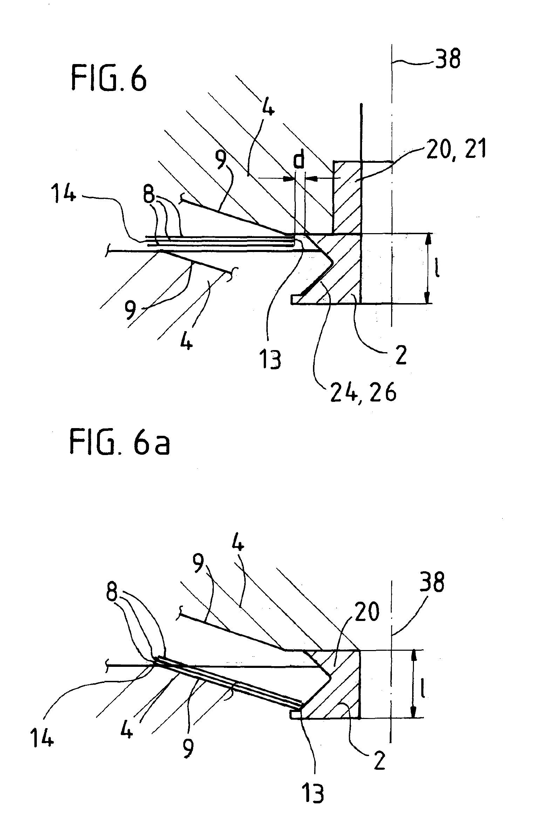

Die Fig. 6 zeigt eine weitere Variante der Kontur 24, 26 des Prallkörpers 20, 21, wobei sich der von der Ventilscheibe(n) öffenbare Durchtrittsquerschnitt zu Beginn der Öffnung der Ventilscheibe(n) 8 vergrößert und ab einem bestimmten Öffnungshub der Ventilscheibe(n) 8 wieder reduziert, bis die Durchtrittsöffnung der Ventilscheibe(n) 8 bei vollständiger Öffnung und Anlage an der Anschlagfläche 9 wieder geschlossen wird, wie in Fig. 6a gezeigt. Die Kontur 24, 26 kann dabei auch eine andere als die gezeigte Form aufweisen, sodass die Charakteristik des Dämpfungsventils 1 in quasi beliebiger Weise beeinflussbar ist.

In der Fig. 7 wird die Schnittdarstellung eines Dämpfungsventils 1 gezeigt, wobei gegenüber der Fig.2 die Ventilscheibe 8 des Dämpfungsventils 1 in der ersten Strömungsrichtung 10 teilweise geöffnet ist. Durch die teilweise Öffnung der Ventilscheibe 8 wird diese von der zweiten Anlagefläche 34 des Ventilkörpers 4 abgehoben, sodass Wirkmedium von dem zweiten Wirkraum 3 über die Einlassöffnung 15 des Durchtrittkanalsystems 6, an der Ventilscheibe 8 und dem Prallkörper 20, 21 vorbei und durch die Auslassöffnung 16 des Durchtrittkanalsystems 6 in den ersten Wirkraum 2 überführbar ist. In diesem Fall ist der Druck des Wirkmediums in dem zweiten Wirkraum 3 größer als in dem ersten Wirkraum 2. Ist der Druck des Wirkmediums in den beiden Wirkräumen 2,3 nahezu wieder ausgeglichen, dann nimmt die Ventilscheibe 8 wieder ihre Ruhestellung ein und verschließt das Durchtrittskanalsystem 6 im Bereich der zweiten Anlagefläche 34, sodass kein Wirkmedium mehr von dem einen Wirkraum 2,3 in den anderen Wirkraum 3,2 überführbar ist.

In der Fig. 8 wird die Schnittdarstellung eines Dämpfungsventils 1 gezeigt, wobei gegenüber der Darstellung in Fig. 7 die Ventilscheibe 8 des Dämpfungsventils 1 in der zweiten Strömungsrichtung 12 geöffnet ist. In diesem Fall ist die Ventilscheibe 8 vollständig geöffnet und liegt an der Anschlagfläche 9 des Ventilkörpers 4 an. Durch die Öffnung der Ventilscheibe 8 wird diese von der ersten Anlagefläche 32 des Ventilkörpers 4 abgehoben, sodass Wirkmedium von dem ersten Wirkraum 2 über die Einlassöffnung 15 des Durchtrittkanalsystems 6, an der Ventilscheibe 8 und dem Prallkörper 20, 21 vorbei und durch die Auslassöffnung 16 des Durchtrittkanalsystems 6 in den zweiten Wirkraum 3 überführbar ist. In diesem Fall ist der Druck des Wirkmediums in dem ersten Wirkraum 2 größer als in dem zweiten Wirkraum 3. Ist der Druck des Wirkmediums in den beiden Wirkräumen 2,3 nahezu wieder ausgeglichen, dann nimmt die Ventilscheibe 8 wieder ihre Ruhestellung ein und verschließt das Durchtrittskanalsystem 6 im Bereich der ersten Anlagefläche 32, sodass kein Wirkmedium mehr von dem einem Wirkraum 2,3 in den anderen Wirkraum 3,2 überführbar ist.

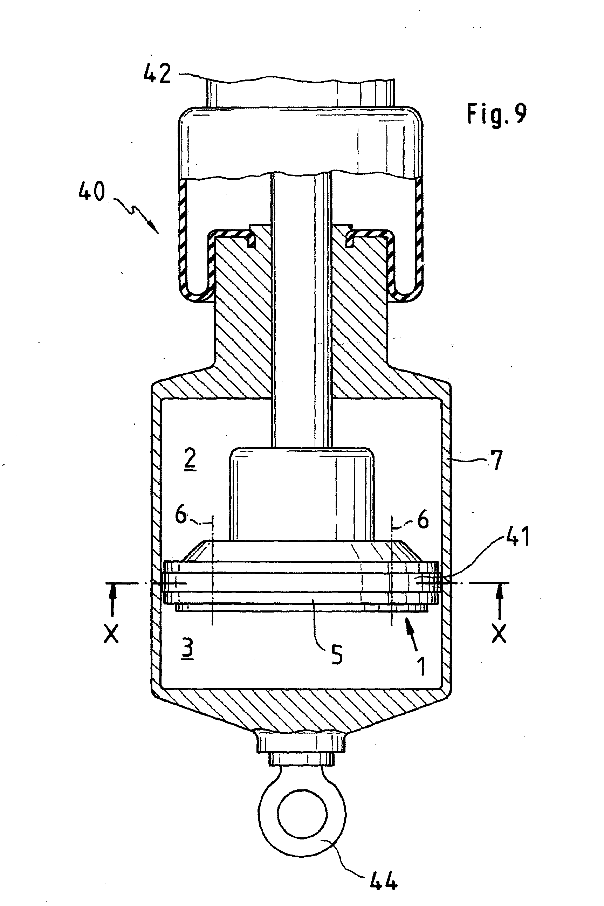

Die Fig. 9 zeigt eine - vorzugsweise pneumatische - Feder-Dämpfer-Einheit 40, welche mit Hilfe einer Anbindung 42 an die Fahrzeugkarosserie und mittels einer Anbindung 44 an die Radaufhängung eines Kraftfahrzeuges verbindbar ist. Das nicht näher dargestellte Dämpfungsventil 1 ist innerhalb eines Kolbens 5 angeordnet, wobei der Kolben 5 gleichzeitig den Ventilkörper darstellt. Das Durchtrittkanalsystem 6 des Dämpfungsventils 1 ist nur schematisch in Form einer Linie dargestellt. Wie in den vorherigen Ausführungen beschrieben ist das Wirkmedium von dem ersten Wirkraum 2 über das Durchtrittkanalsystem 6 des Dämpfungsventils 1 bei entsprechender Druckdifferenz in den zweiten Wirkraum 3 überführbar oder umgekehrt. Der Kolben 5 ist innerhalb eines Zylinders 7 axial beweglich und gegenüber der Zylinderwand mittels eines Dichtringes 41 abgedichtet.

Selbstverständlich ist die Verwendung des Dämpfungsventils 1 nicht auf eine Anordnung in einer Feder-Dämpfer-Einheit mit einem herkömmlichen Dämpfer mit Kolben 5 und Kolbenstange sowie Zylinder 7 beschränkt. Das Dämpfungsventil 1 kann auch in jeder beliebigen Feder-Dämpfer-Einheit zwischen zwei Wirkräumen zur Anwendung kommen, insbesondere wenn diese keinen (Stoß-) Dämpfer mit Kolben und Kolbenstange aufweist, sondern z.B. zwei oder mehrere sich gegensinnig ändernde Luftfederbälge oder Luftfedern mit Zusatzvolumen umfasst.

Die Anwendung des Dämpfungsventils 1 in einer pneumatischen Feder-Dämpfer-Einheit hat den besonderen Vorteil, dass im Vergleich zu herkömmlichen hydraulischen Dämpfungsventilen im Durchmesser wesentlich größere Ventilscheiben 8 verwendbar sind. Dadurch treten, bei gleichen Dämpfungskräften gegenüber hydraulischen Dämpfungsventilen bzw. Dämpfungseinheiten, in pneumatischen Feder-Dämpfer-Einheiten geringere Druckdifferenzen auf, was eine weichere Charakteristik der Feder-Dämpfer-Einheit zur Folge hat. Weiterhin werden - insbesondere aufgrund der größeren Ventilscheiben 8 - größere Öffnungshübe der Ventilscheibe 8 ermöglicht, beispielsweise bis zu 5 mm, wobei bei Ventilscheiben aus Federstahl vorzugsweise 2mm bis 3mm vorzusehen sind. Dadurch kann der Prallkörper 20, 21 über eine relativ große Länge 1 den Öffnungsquerschnitt der Ventilscheibe 8 beeinflussen, was geringere Toleranzen für alle Bauteile des Dämpfungsventils 1 zulässt und damit die Kosten des Dämpfungsventils 1 reduziert.

Außerdem kann bei pneumatischen Feder-Dämpfer-Einheiten gegenüber hydraulischen oder hydropneumatischen Feder-Dämpfer-Einheiten mit herkömmlichen Dämpfungsventilen bei gleicher Dämpferkraft eine größere und damit weichere Ventilscheibe mit einer größeren Amplitude (Hub) verwendeten werden. Die Verwendung der größeren und weicheren Ventilscheiben verbessert die Anwendung eines erfindungsgemäßen Prallkörpers enorm., da die Kontur der Prallfläche auf einer relativ großen Länge 1 abgebildet werden kann.

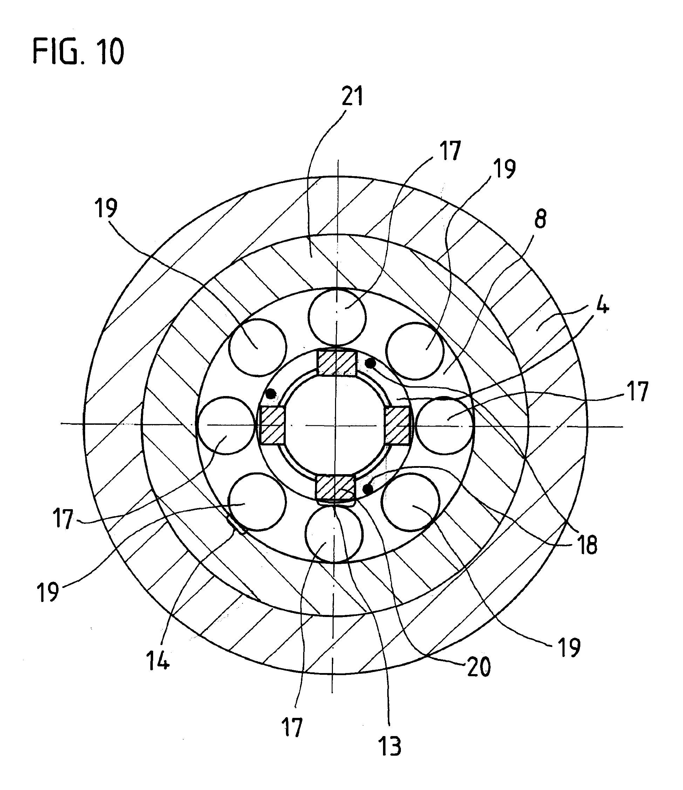

Die Fig. 10 zeigt einen Schnitt X-X durch einen Ventilkörper 4 (Kolben) eines Dämpfungsventils der Fig. 9 in axialer Draufsicht. In dem inneren Teil des Ventilkörpers 4 sind drei Zentrierstifte 18 angeordnet, um die Ventilscheibe(n) 8 in radialer Richtung zu fixieren. Im Gegensatz zu den Dämpfungsventilen der Figuren 1 bis 8 sind in der Fig.10 vier Durchtrittsöffnungen 17, 19 je Durchströmungsrichtung (10, 12) und kein Ringkanal vorhanden. Die Zentrierstifte 18 sind außerhalb des radialen Stirnbereiches 13 der ersten vier Durchtrittsöffnungen 17 der Ventilscheibe(n) 8 und damit nicht im Wirkungsbereich des Dämpfungsventils angeordnet. Der erste Prallkörper 20 ist segmentartig mit vier größeren Wirkungssegmenten im jeweiligen Bereich der für diese Durchströmungsrichtung relevanten ersten Durchtrittsöffnungen 17 ausgebildet, wobei die Kontur des Prallkörpers 20 bzw. des jeweiligen Wirkungssegmentes die Charakteristik des Dämpfungsventils in der ersten oder der zweiten Strömungsrichtung 10, 12 beeinflusst. Der erste Prallkörper 20 ist fest mit dem Ventilkörper 4 verbunden.

Der zweite Prallkörper 21 ist rotationssymmetrisch ausgebildet und ebenfalls fest mit dem Ventilkörper 4 verbunden. Die Kontur des zweiten Prallkörpers 21 beeinflusst den Drosselquerschnitt im Stirnbereich 14 der Ventilscheibe(n) 8 der vier Durchtrittsöffnungen 19 in radialer Richtung nach außen in der anderen Strömungsrichtung 12, 10, wie bereits oben näher erläutert.

### Bezugszeichenliste (ist Teil der Beschreibung)

- 1: Dämpfungsventil
- 2: Erster Wirkraum
- 3: Zweiter Wirkraum
- 4: Ventilkörper
- 5: Kolben
- 6: Durchtrittkanalsystem
- 7: Zylinder
- 8: Ventilscheibe
- 9: Anschlagfläche
- 10: Erste Strömungsrichtung
- 12: Zweite Strömungsrichtung
- 13: Stirnbereich (innerer Durchmesser)
- 14: Stirnbereich (äußerer Durchmesser)
- 15: Einlassöffnung
- 16: Auslassöffnung
- 17: Erste Durchtrittsöffnung
- 18: Zentrierstift
- 19: Zweite Durchtrittsöffnung
- 20: Erster (innerer) Prallkörper
- 21: Zweiter (äußerer) Prallkörper
- 22: Prallfläche
- 24: Geradlinige Kontur
- 26: Kurvenförmige Kontur
- 28: Öffnung
- 32: Erste Anlagefläche
- 34: Zweite Anlagefläche
- 36: Elektromagnet
- 38: Achse
- 39: Achse
- 40: Feder-Dämpfer-Einheit
- 41: Dichtring
- 42: Anbindung an Fahrzeugkarosserie
- 44: Anbindung an Radaufhängung

- d: Abstand
- 1: Länge
- z: Abstand
- D: Durchmesser
- M: Mittelpunkt
- R: Radius
- γ: Winkel

## Patentansprüche

1. Dämpfungsventil (1), umfassend einen Ventilkörper (4) mit einem Durchtrittkanalsystem (6), das zumindest an einer Austrittsseite von mindestens einer Ventilscheibe (8) abgedeckt wird, wobei die Ventilscheibe (8) das Durchtrittskanalsystem (6) in eine erste Strömungsrichtung (10) freigibt und in eine andere zweite Strömungsrichtung (12) verschließt,
**dadurch gekennzeichnet, dass**
im Stirnbereich (13, 14) der Ventilscheibe (8) im radial inneren und/oder im radial äußeren Bereich einer Durchtrittsöffnung (17, 19) ein Prallkörper (20, 21) vorhanden ist.

2. Dämpfungsventil (1) nach Anspruch 1, **dadurch gekennzeichnet, dass**
die Prallfläche (22) des Prallkörpers (20, 21) mit einer zumindest teilweise geradlinigen Kontur (24) versehen ist.

3. Dämpfungsventil (1) nach Anspruch 2, **dadurch gekennzeichnet, dass**
die Prallfläche (22) des Prallkörpers (20, 21) in einem Winkel (γ) zur Achse (38) der Ventilscheibe (8) angeordnet ist.

4. Dämpfungsventil (1) nach Anspruch 3, **dadurch gekennzeichnet, dass**
der Winkel (γ) einen Größenbereich von 0° bis 90° aufweist.

5. Dämpfungsventil (1) nach Anspruch 1, **dadurch gekennzeichnet, dass**
die Prallfläche (22) des Prallkörpers (20, 21) mit einer nichtlinearen - vorzugsweise kurvenförmigen - Kontur (26) versehen ist.

6. Dämpfungsventil (1) nach Anspruch 5, **dadurch gekennzeichnet, dass**
die Kontur (26) in Form eines Kreisbahnabschnittes mit einem Radius (R) und einem Mittelpunkt (M) ausgebildet ist.

7. Dämpfungsventil (1) nach Anspruch 6, **dadurch gekennzeichnet, dass**
der Mittelpunkt (M) der Kreisbahn in der von einer Anlagefläche (32, 34) gebildeten Ebene angeordnet ist.

8. Dämpfungsventil (1) nach Anspruch 6, **dadurch gekennzeichnet, dass**
der Mittelpunkt (M) der Kreisbahn einen Abstand (z) von der Anlagefläche (32, 34) aufweist.

9. Dämpfungsventil (1) nach Anspruch 1, 2 oder 5, **dadurch gekennzeichnet, dass**
der Prallkörper (20, 21) mindestens eine Öffnung (28) aufweist.

10. Dämpfungsventil (1) nach einem der vorherigen Ansprüche, **dadurch gekennzeichnet, dass** die Durchtrittsöffnung bei Anlage der Ventilscheibe(n) (8) an der Anschlagfläche (9) durch Kontakt der Ventilscheibe(n) (8) mit dem Prallkörper (20, 21) schließbar ist.

11. Dämpfungsventil (1) nach einem der vorherigen Ansprüche, **dadurch gekennzeichnet, dass** der Prallkörper (20, 21) nur in einem Teilbereich der Ausströmöffnung (16) des Durchtrittskanalsystems (6) im Stirnbereich (13, 14) der Ventilscheibe (8) angeordnet ist.

12. Dämpfungsventil (1) nach Anspruch 11, **dadurch gekennzeichnet, dass**
der Prallkörper (20, 21) aus einzelnen Segmenten besteht.

13. Dämpfungsventil (1) nach einem der vorherigen Ansprüche, **dadurch gekennzeichnet, dass** der Prallkörper (20, 21) die Ventilscheibe (8) in radialer Richtung fixiert.

14. Dämpfungsventil (1) nach einem der vorherigen Ansprüche, **dadurch gekennzeichnet, dass**
der Prallkörper (20, 21) außerhalb des Durchtrittskanalsystems (6) und in Strömungsrichtung des Wirkmediums betrachtet nach dem Durchtrittskanalsystem (6) und nach der Ventilscheibe (8) angeordnet ist.

15. Dämpfungsventil (1) nach einem der vorherigen Ansprüche, **dadurch gekennzeichnet, dass**
die Ventilscheibe (8) als Ringscheibe ausgebildet ist, die im Bereich ihres Innenumfangs mit einer ersten Anlagefläche (32) des Ventilkörpers (4) und im Bereich ihres Außenumfangs mit einer zweiten Anlagefläche (34) des Ventilkörpers (4) zusammenwirkt, wobei das Durchtrittskanalsystem (6) durch die Anlage der Ventilscheibe (8) an der ersten Anlagefläche (32) in der ersten Strömungsrichtung (10) verschließbar ist und die Anlage der Ventilscheibe (8) in der zweiten Strömungsrichtung (12) zumindest teilweise aufhebbar ist oder umgekehrt, wobei das Durchtrittskanalsystem (6) durch die Anlage der Ventilscheibe (8) an der zweiten Anlagefläche (34) in der zweiten Strömungsrichtung (12) verschließbar ist und die Anlage der Ventilscheibe (8) in der ersten Strömungsrichtung (10) zumindest teilweise aufhebbar ist oder umgekehrt.

16. Dämpfungsventil (1) nach einem der vorherigen Anspruch, **dadurch gekennzeichnet, dass** die Ventilscheibe (8) aus magnetisierbarem Material besteht, wobei die Ventilscheibe (8) in unbelastetem Zustand das Durchtrittkanalsystem (6) verschließt und die Öffnungs- und/oder Schließkraft oder die Steifigkeit der Ventilscheibe (8) mittels eines durch steuerbaren Gleich- oder Wechselstrom beaufschlagbaren Elektromagneten (36) veränderbar ist.

17. Dämpfungsventil (1) nach Anspruch 9, **dadurch gekennzeichnet, dass** der Prallkörper (20, 21) aus einem nichtmagnetischem Material besteht.

18. Feder-Dämpfer-Einheit (40) mit einem gasförmigen Wirkmedium und mindestens zwei Wirkräumen (2, 3), **dadurch gekennzeichnet, dass** ein Dämpfungsventil (1) nach einem der vorherigen Ansprüche vorhanden ist.
